# EUROPEAN PATENT SPECIFICATION

(11) **EP 1 491 437 B1**
(45) Date of publication and mention of the grant of the patent: **01.03.2006**
(21) Application number: 04014328.1
(22) Date of filing: 18.06.2004
(51) Int. Cl.: B62K 23/06, B62K 11/14, B62L 3/02

(54) **Device for adjusting the angular position of a control lever for motorcycles and the like**
Winkeleinstellungsvorrichtung eines Motorradbetätigungshebels
Dispositif d'ajustement angulaire d'un levier de commande pour motocyclettes ou engins similaires

(30) Priority: 23.06.2003 IT TO20030472
(43) Date of publication of application: 29.12.2004
(73) Proprietor: VOLPE Salvatore, 10143 Torino (IT)
(72) Inventor: VOLPE Salvatore, 10143 Torino (IT)
(74) Representative: Buzzi, Franco

(56) References cited:
- US-A- 4 391 160
- US-A- 4 726 252

## Description

The present invention relates to control levers for motorcycles and similar vehicles provided with a driving handlebar to at least one end whereof is applied a collar whereto the control lever is articulated. Typically, two levers are provided, one at each end of the handlebar, respectively for controlling the clutch (obviously, for motorcycles with gearbox transmission) and for controlling the front brake.

More specifically, the invention relates to a device for adjusting the angular position of such control levers, with particular - though not exclusive - reference to off-road motorcycles (cross, enduro, trial). These motorcycles are meant for use on rough paths characterised by slippery surfaces, broken up and with significant slope changes, with the quite frequent risk of loss of control, especially during competitions. The out-of-control motorcycle is destined to fall and it is inevitable for it to impact on one of its two sides: in this eventuality, the parties subjected to breakage are the projecting ones, i.e. the levers that control the clutch and the front brake. For this reason it is common practice for the articulation collar of each lever to be applied to the corresponding end part of the handlebar in relatively loose fashion so it can rotate as a result of an impact and thereby limit the likelihood of breakage of the lever. The negative aspect of this practice is represented by the time and effort required for the driver to restore the original angular position of the collar with the lever, to be able to reutilise it in the usual fashion.

This problem has already been confronted in the US Patent 5,461,936 and solved connecting the articulation collar of the lever, freely rotatable on the handlebar, to a bushing that is rigidly fastened on the handlebar and bears a pair of elastically compressible elements with which co-operates, from opposite sides, an appendage of the collar. In case of fall, the collar with the lever is free to rotate, compressing one or the other of the elastic organs of the bushing, whose subsequent elastic return is able to bring the collar back to the original position.

However, this solution is inadequate, essentially because the yielding nature of the two elastically compressible elements makes the collar, and hence the lever that is articulated thereon, dynamically unstable. Moreover, this known solution also entails the risk of undesired angular displacements of the control lever during the normal use of the motorcycle.

The object of the present invention is to overcome the aforesaid drawback, and to solve the problem defined above in effective, simple and functional fashion.

More in detail, the purpose of the invention is to provide a device for adjusting the angular position of a control lever for motorcycles that allows rapidly and easily to restore the original position of the lever in case of all, and also selectively to change the position of the lever according to the conditions of use of the motorcycle, also while driving, i.e. with the vehicle in motion, as a result of a voluntary operation by the driver.

According to the invention this object is achieved essentially thanks to the fact that the aforesaid collar comprises a stationary portion, a movable portion bearing the lever and movable axially and angularly relative to the stationary position, and torsional coupling means for locking in rotation said movable portion relative to said stationary portion under the action of elastic axial thrust means; said torsional coupling means being able to be disengaged as a result of an axial motion away of said movable portion relative to said stationary portion against the action of the aforesaid elastic thrust means.

According to a preferred embodiment of the invention, the stationary portion of the collar comprises a bushing whereon is slidably and rotatably mounted the movable portion, and the torsional coupling means comprise a ring gear of the movable portion and engaging members projecting axially from the stationary portion in order frontally to engage said ring gear.

Additional characteristics and advantages of the present invention shall become readily apparent from the description that follows with reference to the accompanying drawings, provided purely by way of non limiting example, in which:
Figure 1 is a perspective, schematic and partial view of a motorcycle handlebar bearing a control lever according to the prior art,
Figure 2 is a similar view to Figure 1 showing the control lever with the adjustment device according to the invention,
Figure 3 is an enlarged scale perspective view of the adjustment device,
Figure 4 is a perspective and partially sectioned view of Figure 3, in enlarged scale and according to a different angle,
Figure 5 is an exploded perspective view of Figure 3,
Figure 6 shows a variant of Figure 2,
Figure 7 is an exploded perspective view of Figure 6, and
Figure 8 is a schematic, simplified longitudinal section view of a variation of the invention.

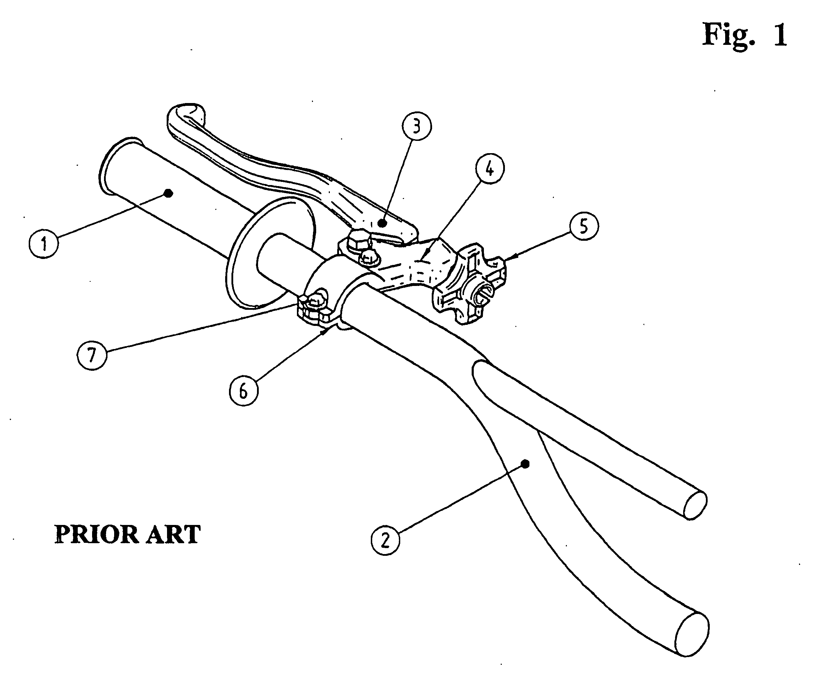

Referring initially to Figure 1, the reference number 2 designates a part of a handlebar of an off-road motorcycle, for instance for motocross, bearing at one end (the left one with respect to the rider's position when driving) a handle 1 and a lever 3 for controlling the clutch, normally by means of a flexible wire transmission. The lever 3 is articulated to a shelf support 4 which bears an adjuster 5 for the sheath of the wire transmission and is in turn borne by a collar 6 applied to the end of the handlebar 2, near the handle 1, through fastening screws 7.

The arrangement described above is wholly similar for the other control lever applied to the opposite end of the handlebar 2 and normally serving for the operation of the front brake of the motorcycle. Said operation can be achieved through a flexible wire transmission like the clutch control lever, or by means of a hydraulic actuator.

With the known arrangement described above in case of impact of the control lever 3, for example as a result of a fall, the collar 6 is able to rotate relative to the end of the handlebar whereon it is applied, consequently modifying the angular position of the lever. To return the control lever 3 to the original position, the rider needs to apply a thrust on the lever, i.e. on the support shelf 4, in such a way as to cause the rotation of the collar 6 in the direction opposite the one caused by the impact of the lever. This operation is not only awkward and inconvenient, but also requires a certain physical effort: for this reason it is normally performed when the vehicle is stopped. During a competition, all this clearly entails time wastage, which can occasionally be critical.

The invention allows to overcome the aforesaid drawbacks, enabling to adjust the angular position of the control levers 3 (be it that of the clutch or of the front brake of the motorcycle) even when in motion, i.e. while the motorcycle is travelling, with a minimal physical effort and in extremely rapid and easy fashion.

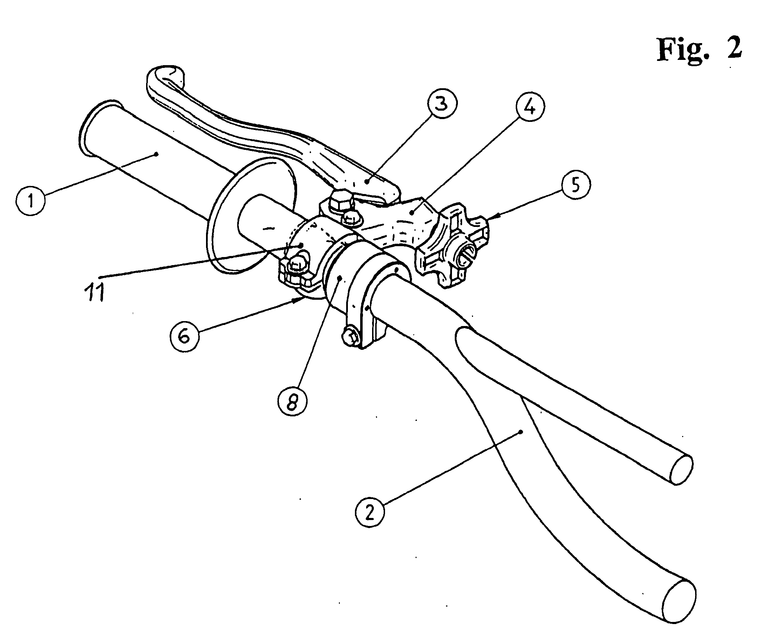

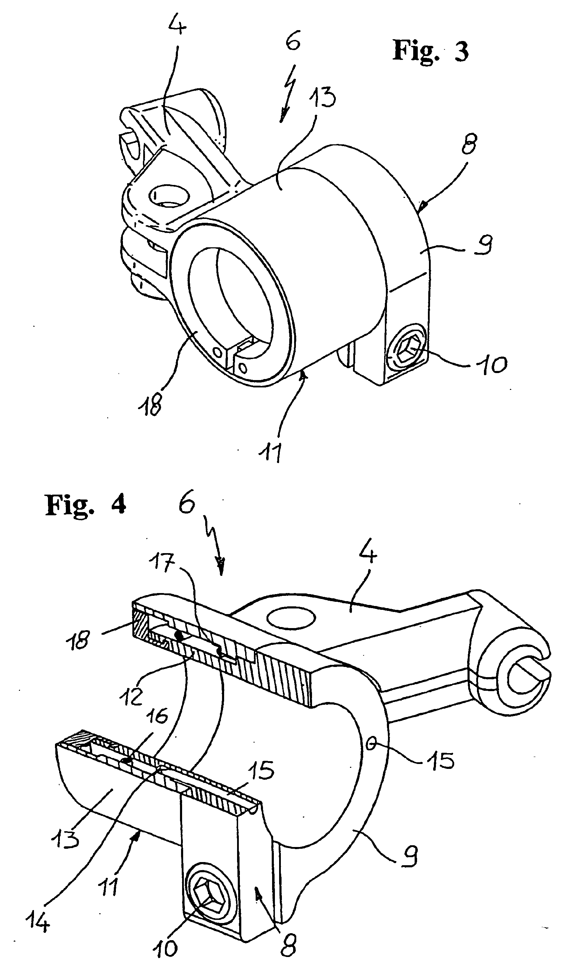

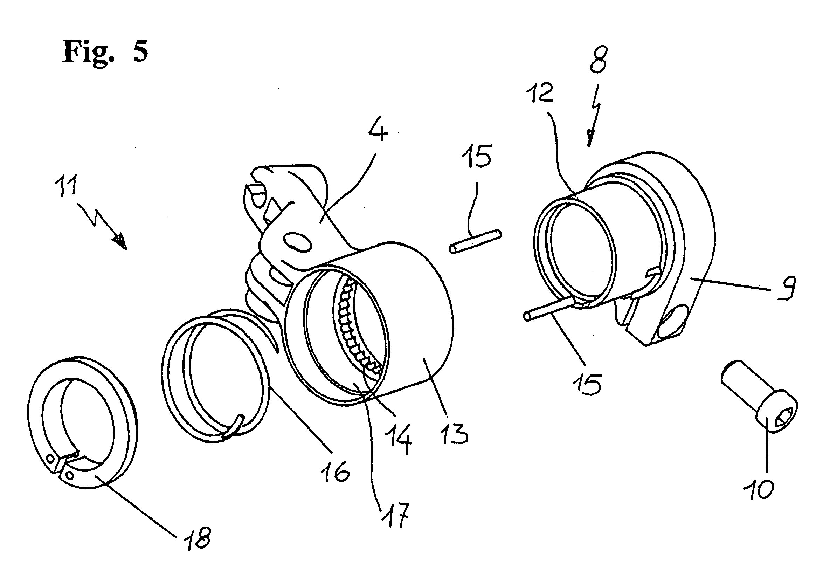

The solution according to the invention is shown in Figure 2, in which parts that are identical or similar to those described with reference to Figure 1 are designated with the same numerical references, as well as in Figures 3, 4, 6 and 7 with reference to the lever of the clutch, and in Figure 5 with reference to the lever of the front brake, applied to the opposite ends of the handlebar 2. Very briefly, the collar 6 whereby the control lever 3 is applied to the end of the handlebar 2 comprises a stationary portion 8, fastened in relatively loose fashion to the handlebar 2 by means of a sleeve 9 with fastening screw 10, and a movable portion 11 positioned, relative to the stationary portion 9, on the side of the handle 1.

As shown in greater detail in Figures 4 and 5, the stationary portion 8 comprises a bushing 12 that is coaxially integral with the tightening sleeve 9 and whereon the movable portion 11 can be moved axially and angularly. Said movable portion 11 is constituted by an annular collar 13 formed, on the side oriented towards the tightening sleeve 9 of the stationary portion 8, with a ring gear 14 normally kept engaged with engaging stakes 15 (whereof there are two or more) borne by the stationary portion 8 and projecting axially from the bushing 12. The engagement between the ring gear 14 and the engaging stakes 15 is achieved by a helical compression spring 16 interposed coaxially between the annular collar 13 and the bushing 12 and reacting on one side against an annular support 17 of the annular collar 13 and on the other against a plug in the form an elastic split ring 18 fastened, in the manner illustrated in Figure 4, at the end of the bushing 12 that is opposite to the fastening collar 9 and with respect to which the annular collar 13 of the movable portion 11 is slidable and rotatable.

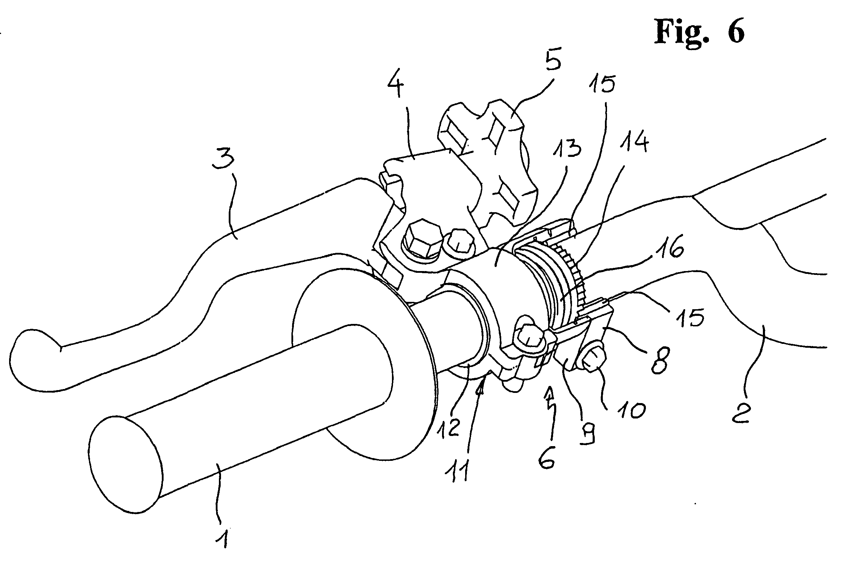

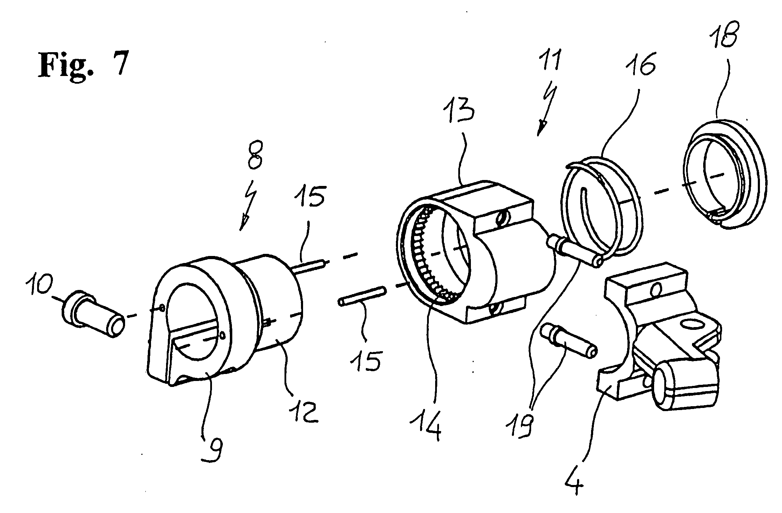

The annular collar 13 bears the support shelf 4 for the articulation of the control lever 3: said support shelf 4 can be formed integrally with the annular collar 13, in the manner shown in Figure 5, or it can be constituted by a body that is separate from said annular collar 13 and removably fastened thereto by means of screws 19, as shown in the variant of Figures 6 and 7.

In operation, the movable portion 11 is, as stated, normally torsionally coupled to the stationary portion 8 by effect of the engagement between the ring gear 14 and the engagement stakes 15 under the action of the thrust spring 16. If, for example because of an impact of the lever 3 as a result of a fall, there is a rotation of the stationary portion 8 relative to the handlebar 2, and hence a consequent rotation of the lever 3, the original angular position can be restored in convenient, easy and rapid fashion simply by axially moving the movable portion 11 away from the stationary portion 8 until the ring gear 14 is disengaged from the engagement stakes 15 against the action of the spring 16, then rotating the movable portion 11 relative to the stationary portion 8 to the desired angular position of the lever 3, and then releasing said movable portion 11 in such a way as to restore the engagement between the ring gear 14 and the engagement stakes 15, under the action of the thrust spring 16. These operations of angularly repositioning the control lever 3 can easily be performed by the rider of the motorcycle with a minimal effort and, above all, in motion, i.e. without any need to stop the vehicle.

Naturally, the construction details and the embodiments may be varied widely with respect to what is described and illustrated purely by way of example herein, without thereby departing from the scope of the present invention as defined in the appended claims.

Thus, as clarified above, the described arrangement of the adjustment device according to the invention can be applied both to the control lever of the clutch, and to the control lever of the front brake: as shown in Figures 5 and 7 the arrangement will be in the two cases specularly symmetrical.

Moreover, the torsional coupling system between the movable portion 11 and the stationary portion 8 may differ from the one described with reference to the drawings and for example be inverted, i.e. with the ring gear 14 borne by the stationary portion 8 and with the engagement members 15 borne by the movable portion 11. Alternatively, the torsional coupling system between the movable portion 11 and the stationary portion 8 may for example consist of a coupling with grooves or frontal toothing. It should also be noted that the elastic system for axially thrusting the movable portion 11 towards the stationary portion 8 may consist, instead of a helical compression spring, of a traction spring or of functionally equivalent elastic systems.

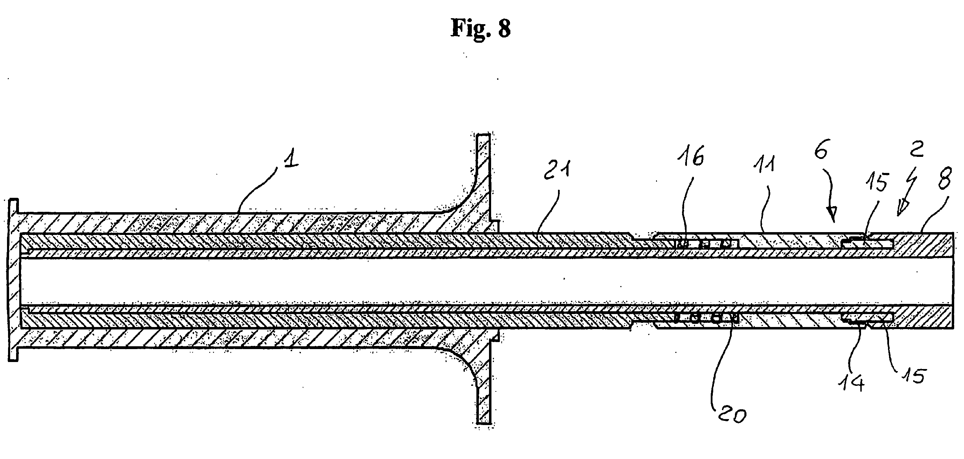

Also possible, within the scope of the present invention, are solutions in which the collar 6 of the control lever 3 and is partly or wholly integrated with the handlebar 2. An example in this sense is shown in the variant of Figure 8, in which parts that are identical or similar to those described previously are designated by the same numerical references. In this variant the handlebar 2 has, adjacent to the handlebar 1, an annular depression 20 whereon is mounted axially slidable, against the action of the spring 16, the movable portion 11 of the collar 6, which is formed by a sleeve with the inner teeth 14 normally maintained in torsional engagement with the engagement stakes 15 (or with a complementary toothing) projecting from the stationary portion 8 formed directly by the handlebar 2. The support 4 of the control lever 12, not shown, will in this case mounted with the possibility of rotating on the sleeve 11, and the thrust spring 16 is interposed between the sleeve 11 and a tubular element 21 planted on the end of the handlebar 2 below the handle 1. The operation of this variant is wholly similar to the one described above.

## Claims

1. A device for adjusting the angular position of a control lever (3) for motorcycles and the like, in which said control lever (3) is articulated to a collar (6) which can be applied on an end part of a handlebar (2) **characterised in that** said collar (6) comprises a stationary portion (8), a movable portion (11) bearing the control lever (3) and able to be displaced axially and angularly relative to the stationary portion (8), and torsional coupling means (14, 15) for locking in rotation said movable portion (11) relative to said stationary portion (8) under the action of axial thrust elastic means (16); said torsional coupling means (14, 15) being able to be disengaged as a result of an axial move away of said movable portion (11) relative to said stationary portion (8) against the action of said elastic thrust means (16).

2. Device as claimed in claim 1, **characterised in that** said stationary portion (8) comprises a bushing (12) whereon is mounted, slidable and rotatable, said movable portion (11).

3. Device as claimed in claim 1 or claim 2, **characterised in that** said torsional coupling means comprise a ring gear (14) of said movable portion (11) and engagement members (15) axially projecting from said stationary portion (8) in order frontally to engage said ring gear (14).

4. Device as claimed in one or more of the previous claims, in which said control lever (3) is articulated to said collar (6) by means of a shelf support (4), **characterised in that** said shelf support (4) is formed in a single piece with said movable portion (11).

5. Device as claimed in one or more of the claims 1 through 3, in which said control lever (3) is articulated to said collar (6) by means of a shelf support (4), **characterised in that** said shelf support (4) is formed by a body that is distinct from said movable portion (11) and is fastened thereto in removable fashion.

6. An assembly for driving motorcycles and the like, **characterised in that** it comprises a handlebar (2) and at least a device for adjusting the angular position of a control lever (3) as claimed in one or more of the previous claims.

7. A handlebar for motorcycles and the like, **characterised in that** it comprises at least a device for adjusting the angular position of a control lever (3) as claimed in claim 1 in which said collar (6) with said stationary portion (8) and said movable portion (11) bearing the control lever (3) is integrated with said handlebar (2).

## Revendications

1. Dispositif d'ajustement de la position angulaire d'un levier de commande (3) pour motocyclettes ou engins similaires, dans lequel ledit levier de commande (3) est articulé par rapport à un collier (6) qui peut être appliqué sur une pièce d'extrémité d'un guidon (2), **caractérisé en ce que** ledit collier (6) comprend une partie fixe (8), une partie mobile (11) supportant le levier de commande (3) et pouvant être déplacée de façon axiale et angulaire par rapport à la partie fixe (8), et des moyens de couplage de torsion (14, 15) permettant de verrouiller la rotation de ladite partie mobile (11) par rapport à ladite partie fixe (8) sous l'action d'un moyen élastique à poussée axiale (16) ; lesdits moyens de couplage de torsion (14, 15) pouvant être désengagés suite à un déplacement axial de ladite partie mobile (11) par rapport à ladite partie fixe (8) contre l'action dudit moyen de poussée élastique (16).

2. Dispositif selon la revendication 1, **caractérisé en ce que** ladite partie fixe (8) comprend une bague (12) sur laquelle est montée ladite partie mobile (11) de façon coulissante et pivotante.

3. Dispositif selon la revendication 1 ou la revendication 2, **caractérisé en ce que** ledit moyen de couplage de torsion comprend une couronne (14) de ladite partie mobile (11) et des pièces de mise en prise (15) faisant saillie de façon axiale depuis la partie fixe (8) afin de se mettre en prise de façon frontale avec la couronne (14).

4. Dispositif selon l'une quelconque des revendications précédentes, dans lequel ledit levier de contrôle (3) est articulé par rapport audit collier (6) au moyen d'une crémaillère (4), **caractérisé en ce que** ladite crémaillère (4) ne forme qu'une seule pièce avec ladite partie mobile (11).

5. Dispositif selon l'une quelconque des revendications 1 à 3, dans lequel ledit levier de commande (3) est articulé autour dudit collier (6) au moyen d'une crémaillère (4), **caractérisé en ce que** ladite crémaillère (4) est formée par un corps qui est distinct de ladite partie mobile (11) et est assemblée à cette dernière de façon à pouvoir être retirée.

6. Assemblage permettant de conduire des motocyclettes et engins similaires, **caractérisé en ce qu'**il comprend un guidon (2) et au moins un dispositif d'ajustement de la position angulaire d'un levier de commande (3) selon l'une quelconque des revendications précédentes.

7. Guidon pour motocyclettes ou engins similaires, **caractérisé en ce qu'**il comprend au moins un dispositif d'ajustement de la position angulaire d'un levier de commande (3) selon la revendication 1, dans lequel ledit collier (6) avec ladite partie fixe (8) et ladite partie mobile (11) supportant le levier de commande (3) sont intégrés audit guidon. (2).

## Patentansprüche

1. Vorrichtung zur Einstellung der Winkelstellung eines Betätigungshebels (3) für Motorräder und Ähnliches, bei der der Betätigungshebel (3) an einer Manschette (6) gelenkig befestigt ist, wobei die Manschette (6) am Endstück einer Lenkstange (2) befestigt werden kann,
**dadurch gekennzeichnet,**
**dass** die Manschette (6) einen feststehenden Bestandteil (8) und einen beweglichen, den Betätigungshebel (3) lagernden Bestandteil (11) umfasst, wobei der bewegliche Bestandteil (11) in Bezug auf den feststehenden Bestandteil (8) axial und winkelveränderlich verstellt werden kann, und weiterhin die Manschette (6) ein drehmomentübertragendes Kopplungsmittel (14, 15) umfasst, das eine Drehverstellung des beweglichen Bestandteils (11) relativ zu dem feststehenden Bestandteil (8) aufgrund der Verriegelungswirkung eines elastischen axial druckausübenden Mittels (16) verhindert, wobei das drehmomentübertragende Kopplungsmittel (14, 15) in Folge einer gegen den Widerstand des elastischen druckausübenden Mittels (16) wirkenden axialen Auseinanderbewegung des beweglichen Bestandteils (11) gegenüber dem feststehenden Bestandteil (8) gelöst werden kann.

2. Vorrichtung nach Anspruch 1,
**dadurch gekennzeichnet,**
**dass** der feststehende Bestandteil (8) eine Führungsbuchse (12) aufweist, auf der der bewegliche Bestandteil (11) verschieblich und verdrehbar aufgesteckt ist.

3. Vorrichtung nach Anspruch 1 oder 2,
**dadurch gekennzeichnet,**
**dass** das drehmomentübertragende Kopplungsmittel am beweglichen Bestandteil (11) einen Zahnkranz (14) und am feststehenden Bestandteil (8) axial hervorstehende einrastende Elemente (15), um den Zahnkranz (14) von der Seite her zu verrasten, umfasst.

4. Vorrichtung nach einem oder mehreren der vorangehenden Ansprüche, wobei der Betätigungshebel (3) an der Manschette (6) mittels einer Haltevorrichtung (4) befestigt ist,
**dadurch gekennzeichnet,**
**dass** die Haltevorrichtung (4) einstückig mit dem beweglichen Bestandteil (11) ausgebildet ist.

5. Vorrichtung nach Anspruch 1 bis 3, wobei der Betätigungshebel (3) an der Manschette (6) durch eine Haltevorrichtung (4) befestigt ist,
**dadurch gekennzeichnet,**
**dass** die Haltevorrichtung (4) aus einem vom beweglichen Bestandteil (11) unabhängigen Stück besteht, das demontierbar an dem beweglichen Bestandteil (11) befestigt werden kann.

6. Eine Baugruppe für den Betrieb von Motorrädern und Ähnlichem,
**dadurch gekennzeichnet,**
**dass** sie eine Lenkstange (2) und mindestens eine Vorrichtung zur Veränderung der Winkelstellung eines Betätigungshebels (3) nach einem oder mehreren der vorangehenden Ansprüche aufweist.

7. Eine Lenkstange für Motorräder und Ähnliches,
**dadurch gekennzeichnet,**
**dass** sie mindestens eine Vorrichtung zur Veränderung der Winkelstellung eines Betätigungshebels (3) gemäß Anspruch 1 aufweist, bei der die Manschette (6) mit dem feststehenden Bestandteil (8) und dem beweglichen Bestandteil (11), der den Betätigungshebel (3) lagert, in die Lenkstange (2) integriert ist.
